# EUROPEAN PATENT SPECIFICATION

(11) **EP 1 766 917 B1**
(45) Date of publication and mention of the grant of the patent: **11.05.2016**
(21) Application number: 04744157.1
(22) Date of filing: 10.07.2004
(51) Int. Cl.: G07F 17/32, H04L 29/06, A63F 13/30

(54) **A GAMING DEVICE, A SYSTEM FOR GAMING AND A METHOD OF CONTROLLING A GAME**
SPIELEINRICHTUNG, SYSTEM ZUM SPIELEN UND VERFAHREN ZUM STEUERN EINES SPIELS
DISPOSITIF DE JEU, SYSTEME DE JEU ET PROCEDE DE FONCTIONNEMENT D'UN JEU

(43) Date of publication of application: 28.03.2007
(73) Proprietor: Nokia Technologies Oy, 02610 Espoo (FI)
(72) Inventor: SALO, Antti, FIN-08500 Lohja (FI); KESKI-JASKARI, Turo, FIN-00340 Helsinki (FI)
(74) Representative: Higgin, Paul
(86) International application number: PCT/IB2004/002506
(87) International publication number: WO 2006/008572

(56) References cited:
- EP-A2- 1 393 788
- WO-A1-97/37504
- WO-A1-98/55192
- US-A1- 2003 114 224
- US-A1- 2004 077 394
- US-A1- 2004 082 379

## Description

### FIELD OF THE INVENTION

Embodiments of the invention relate to a gaming device, a system for gaming and a method of controlling a game. In particular, they relate to a gaming device, a system for gaming and a method of controlling a game in the field of mobile cellular telecommunications.

### BACKGROUND TO THE INVENTION

US2003/0114224 discloses a system for playing a distributed game over a wireless telecommunications network. US 2004/0082379 discloses a system using tokens that allows a user to play a game on a mobile communications terminal at a location remote from the game hall.

WO98/55192 discloses a video crane game. In WO98/55192 a user moves a mechanical crane device in an x-y plane. A selection head of the mechanical crane device is moved towards a display screen that is displaying images. The outcome of the game is determined based on the location of the selection head with respect to the images displayed by the device. US2004/0077394 discloses a video game that imposes a penalty for a violation of a rule.

EP 1393788 discloses a game device saving game result, on a removable card.

It is now common for mobile cellular telephones to have games that are embedded in the system software. These games are bundled with the mobile telephone when it is sold.

It has recently become possible to download games to a mobile cellular telephone over the air (or by any other means). This allows a mobile cellular telephone to be reprogrammed with a new game.

The downloading of games over the air allows a user of a mobile telephone to customize his or her mobile telephone so that it has his or her favorite games.

It is now also possible to play multi-user games via a mobile cellular telephone. A user of a mobile telephone may for example, log onto a remote server to play the game with other people who have logged on either through their own mobile telephones or, for example, via the Internet. Another user of a mobile telephone may, for example, form a local ad-hoc network with other local wireless gaming devices, using for example BLUETOOTH technology.

There may be a significant investment in developing new games. The normal business model by which a game developer recoups the investment made is by selling each game for a price that includes a profit margin. A disadvantage of this business model is that the initial purchase price for a game may be high.

Another more recent business model that is applicable to the mobile cellular telephone industry is shareware. Shareware generally operates on the principal that a working version of the game can be obtained for free and can be distributed to others without restriction. The game developers may recoup their investment by generating an income stream from the game while it is being used as opposed to when it is first distributed. They may, for example, sell add-ons to the game or block certain features in the game and then sell versions of the game without the blocks.

It would be desirable to provide a gaming system that uses an alternative mechanism to generate an income stream while it is played.

### BRIEF DESCRIPTION OF THE INVENTION

According to one embodiment of the invention there is provided a gaming device for playing a game according to claim 1.

According to another embodiment of the invention there is provided a computer program comprising computer program instructions which when run on a computer provide a gaming device, for playing a game according to claim 23.

According to another embodiment of the invention there is provided a system for enabling a plurality of gaming devices including a first gaming device having a first user and a second gaming device having a second user, to participate in a game according to claim 24.

According to another embodiment of the invention there is provided a game server that is remotely accessible by a plurality of users playing a game according to claim 27.

According to another embodiment of the invention there is provided a computer program comprising computer program instructions which when run on a computer provides a game server according to claim 29.

### BRIEF DESCRIPTION OF THE DRAWINGS

For a better understanding of the present invention reference will now be made by way of example only to the accompanying drawings in which:
Figure 1 illustrates a hand-portable electronic device operable as a gaming device;
Figure 2 illustrates a process for controlling the functionality of a game;
Figure 3 illustrates a system in which gaming devices use a remote server to play a game; and
Figure 4 illustrates a transaction, initiated by a user of the remote device, for changing the state of a game for the first user from a second penalty state to a first non-penalty state.

### DETAILED DESCRIPTION OF EMBODIMENTS OF THE INVENTION

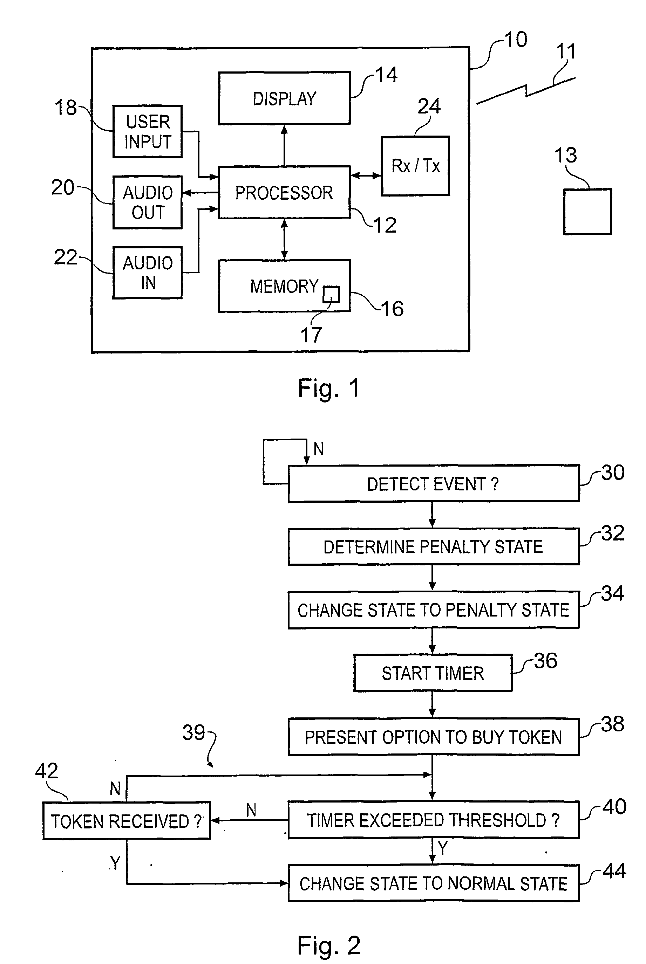

Figure 1 illustrates a gaming device 10 for playing a game comprising: detection means 12 for detecting the occurrence of a specified event within a game while it is being played; and control means 12 for changing the state of the gaming device 10 from a first non-penalty state to a second, penalty state in response to the detection means 12 detecting the occurrence of the specified event within the game and for returning the state of the gaming device 10 from the second, penalty state to the first non-penalty state.

In more detail, figure 1 illustrates a hand-portable electronic device 10 comprising: a processor 12, a display 14, a memory 16, a user input device 18 and an audio output device 20. The illustrated hand-portable electronic device 10 in this example is a mobile cellular telephone and further comprises an audio input device 22 and a cellular radio transceiver 24.

The processor 12 is connected in two-way communication with the memory 16 and with the radio cellular transceiver 24. It is also connected to provide command signals to the display 14 and the audio output device 20 and to receive input signals from the user input device 18 and the audio input device 22. It should be appreciated that the electronic device 10 may comprise further functional elements and that the processor 12 may be comprised of a plurality of processor units.

The memory 16 stores computer program instructions that control the operation of the electronic device 10 when loaded into the processor 12. The memory 16 may be any suitable type of memory, for example, it may be an extended memory chip. The memory 16 includes computer program instructions for a game, which when loaded into the processor 12 enable a user to interact with the device 10 and play the game. As a consequence, the device 10 may be referred to as a gaming device. The user may interact with the device via the display 14 and user input device 18 and, optionally, then audio output device 20.

The computer program instructions may arrive at the device 10 via an electromagnetic carrier signal 11 or be copied from a physical entity 13 such as a computer program product, a memory device or a record medium such as a CD-ROM or DVD.

The gaming device 10 enables a user to play any suitable type of game for which computer program instructions are stored in the memory 16. Examples of games include first person perspective games, role playing games, board games and arcade games.

In embodiments of the invention, the gaming device 10 enters a penalty state if a specified event occurs within a game. The user of the gaming device 10 can exit the penalty state either by waiting until a time-out period has expired or by buying a token which cancels the penalty state or by completing a specified task in the game.

For example, if the game is a snowboarding game, then when a user's game character takes a tumble and is injured, the user is prevented from playing the game until the injury has healed or until the user pays a fee or until the user completes a specified task. In this example, the event is the tumble and the penalty state of the device prevents the user playing the game for a certain period.

Another example is a competitive game, where one user competes against another. In this example, the electronic device 10 may have a Low Power Radio Frequency transceiver (e.g. as BLUETOOTH transceiver), for forming an ad-hoc wireless network with another device to play a multi-user game. When a user's game character loses a competition that character loses, for example, a weapon to the competing user's game character. However, the user is then able to purchase a new replacement weapon. In this example, the event is losing the competition and the penalty state of the device is one in which the user's game character is without that weapon.

The inventive process is further described with reference to figure 2. The game has an associated data structure 17 stored in the memory 16. This data structure is in the form of a table that specifies a plurality of events that can occur within the game and associates, with each of those events, a penalty state. When a penalty state becomes the state of the gaming device, it effects how a user of the gaming device 10 participates in the game. Typically, when the gaming device is in a penalty state the user's character in the game is handicapped or disadvantaged or the game play is diminished in some way or the user's participation in the game is limited in some aspect. The specified events are non-temporal in the sense that an event does not merely correspond to the expiry of a timer limiting the amount of game play and are generally, at least partially, under the control of the user of the gaming device 10. That is the likelihood of a particular event occurring within the game is at least partially dependent upon how the user of the gaming device 10 plays the game. In a multi-user game, the likelihood of a particular event occurring within the game may also be at least partially dependent upon how another user in the game plays the game. The user may therefore, with skill, improve the chances of avoiding an event that results in a penalty state.

During the playing of a game, the gaming device 10 at step 30 operates to detect the occurrence of an event specified by the data structure 17. When the occurrence of a specified event is detected the process moves to step 32, where the gaming device 10 uses the data structure 17 to determine the penalty state associated with the detected event. Then at step 34, the gaming device 10 changes its state to the determined penalty state. The gaming device 10 immediately starts a timer at step 36 and presents, at step 38, a transaction option to the user for disabling the penalty state. In the illustrated example, the option involves the purchase of a token, however, in other implementations it may involve the completion of a specified task. Typically this transaction option will be displayed in the display 14. The process then enters a loop 39. The loop 39 may be exited at step 40 when the timer reaches a threshold value. This threshold value may be dependent upon the current penalty state and may be stored as a value associated with the current penalty state in the data structure 17. The loop 39 may also be exited if a token is received by the gaming device or the specified task is completed at step 42. When the loop 39 is exited, the gaming device 10 changes its state back to its normal state at step 44. The user of the gaming device 10 may thus exit the loop 39 at any time by purchasing a token or completing the specified task. When such a token is received or the specified task is completed at the gaming device 10, the loop 39 is exited at step 42 and the state of the gaming device reverts from the penalty state to the normal state.

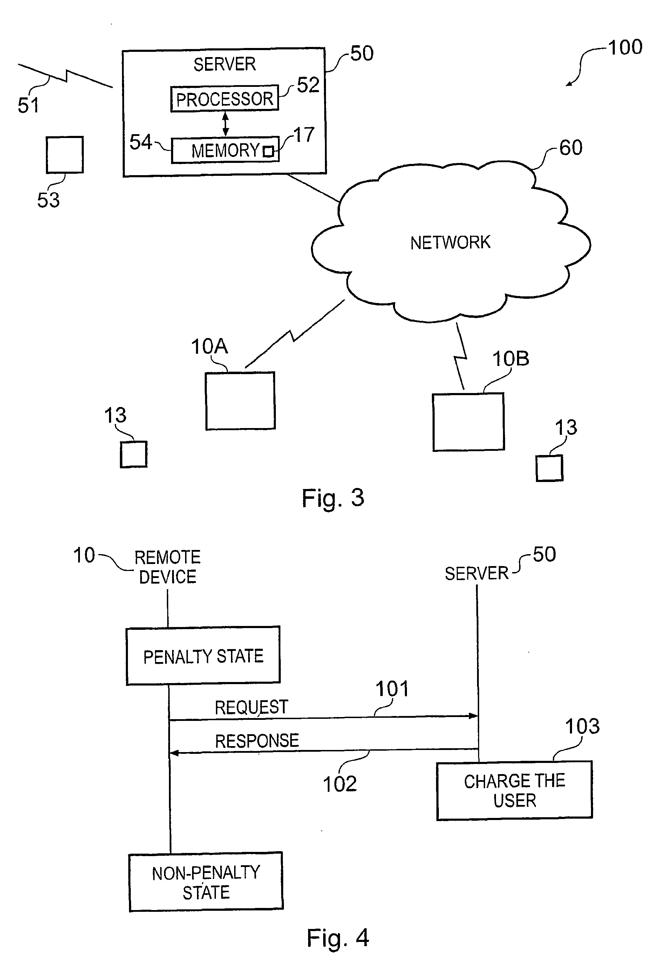

Although the penalty state is a state of the device in this embodiment, it may also be described as a state of the game. Figure 4 illustrates a transaction, initiated by a user of the remote device 10 by accepting the transaction option. The transaction changes the state of the game from a penalty state to a non-penalty state.

The transaction option for disabling the penalty state may be the same for all penalty states, for example, it may require the purchase of a token (which may be the same for all penalty states or dependent upon the type of penalty state) or the completion of a task (which may be the same for all penalty states or dependent upon the penalty state).

The token may, for example, be an electronic token. One type of electronic token is a code sequence that is input via the user input device 18 but a preferred electronic token is a message received via the radio transceiver 24.

If the transaction option for disabling the penalty state is the purchase of an electronic token, then the user is presented with an option for purchasing an electronic token. If the user accepts this option a transaction message 101 is sent to a remote authorization server 50 using the radio transceiver 24. Typically, this transaction message 101 is dependant upon the current penalty state of the gaming device 10 and includes an identification of the user of the gaming device 10. When the transaction message 101 is received at the authorization server, the server issues a token to the gaming device by sending to the gaming device 10 a response message 102 that authorizes the deactivation of the current penalty state of the gaming device 10. The authorization server 50 also uses the identification information of the user to charge the user for issuing the token. The charge 103 made for a token may vary and may depend upon the particular penalty state it deactivates. The token will typically have a security feature that prevents its reuse. This may include a time stamp which limits its use to a particular period of time or a mechanism that allows it only to be used once. The messages 101, 102 exchanged between the gaming device 10 and the server may be SMS messages.

If the transaction option for disabling the penalty state is the completion of an extra specified task, then a transaction message 101 is sent to a remote authorization server using the radio transceiver 24. Typically, this transaction message 101 is dependant upon the current penalty state of the gaming device 10 and includes an identification of the user of the gaming device 10. When the transaction message 101 is received at the authorization server, the server issues a specified task to the gaming device by sending to the gaming device 10 a response message 102 that either specifies the task or identifies the specified task. The authorization server may also use the identification information of the user to charge the user for issuing the specified task. The charge 103 made for a task may vary and may dependent upon the particular penalty state it deactivates. The messages 101, 102 exchanged between the gaming device 10 and the server may be SMS messages. The specified task may, for example, involve a test of skill or knowledge. In one implementation, the specified task involves answering one or more questions, provided by the server, correctly. As an example, if a game character is injured the specified task may involve answering a series of medical questions. This advantageously enables the introduction of educational material into the game.

A revenue stream from a game can thus be obtained by transacting with a remote gaming device, used by a first user to play a game, to change the state of the game for the first user from a penalty state to a non-penalty state.

Typically a game comprises one or more "user playing objects". A "user playing object" is an object that is apparent to the users of the game and which participates in the game play in a manner controlled by a particular user. It could for example be a character in a role playing. Each user playing object may have one or more attributes. An "attribute" is a characteristic of a playing object that affects its participation in a game.

It should be appreciated, that each different event specified in the data structure 17 may have a different associated penalty state. The gaming device 10 may therefore enter any one of a plurality of penalty states. One type of penalty state disables a user playing object in the game. Another possible type of penalty state disables all user playing objects associated with the current user in this and other games. A further possible type of penalty state affects one or more attributes of a user playing object associated with the user in the current game. A further possible type of penalty state affects one or more attributes of a user playing object associated with the user in this game and one or more corresponding attributes of the user playing object associated with the user in at least another game.

Thus a penalty state may be limited to the current game or may have persistence through a number of different games. The penalty state may prevent a user playing a game or may limit the way in which a user plays a game.

It is possible to pause game playing in some games. For such a game, a game instantiation starts at the beginning of a game and ends when the game concludes and a session is a period during which a game is played until a pause or a conclusion.

One type of penalty state may be limited to a session in which the detected event occurs. In this case the penalty state does not have persistence. Another type of penalty state may be limited to a particular game instantiation during which the detected event occurs. In this case the penalty state will have persistence through the sessions of the current instantiation but will not have persistence between instantiations. Another type of penalty state may have persistence between instantiations of the game. This persistence in time may be achieved by storing when a gaming session ends the timer value, a real time clock value at that time and information identifying the current penalty state. Then, when a new session is initiated, the prior penalty state is identified from the stored information and recorded real clock time value is subtracted from the current real clock time value and the difference is added to the recorded timer value to obtain a current timer value. The current timer value is then compared with the relevant threshold associated with the prior penalty state as in step 40 of figure 2. If the threshold is exceeded, the state of the gaming device is set to the normal state, but if the threshold is not exceeded, the state of the device is set to the prior penalty state.

Figure 3 illustrates a system 100 for enabling a plurality of gaming devices 10A, 10B including a first gaming device 10A having a first user and a second gaming device 10B having a second user, to participate in a game, the system comprising: a game server 50 that is remotely accessed by the plurality of gaming devices 10A, 10B to play a game, the game server 50 comprising: detection means 52 for detecting the occurrence of a specified event within a game while it is being played by the first user; and control means 52 for changing the state of the game for the first user from a first non-penalty state to a second penalty state in response to the detection means detecting the occurrence of the specified event and for returning the state of the game for the first user from the second penalty state to the first non-penalty state.

In more detail, figure 3 illustrates a further implementation of the invention, in which remote gaming devices 10A and 10B are operable to play a game on the gaming server 50 by communicating via the network 60, e.g. cellular mobile telephone network or broad based network such as Internet. The gaming server may enable each of the gaming devices 10A and 10B to play, as clients to the gaming server 50, different games or different instantiations of the same game. The gaming server may also enable a multi-user game in which both the gaming devices 10A and 10B participate concurrently in the same game. In this implementation, the gaming server 50 performs the penalty process illustrated in figure 2. However, the process does not affect the state of the server 50 but affects the interaction of the server 50 with a particular gaming device 10.

The server 50 comprises a processor 52 and a memory 54 that stores a data structure 17 for the game that is currently being played remotely via the gaming device 10a. The memory 54 stores computer program instructions that control the operation of the server 50 when loaded into the processor 52. The memory 54 may be any suitable type of memory. The memory 54 includes computer program instructions for one or more games, which when loaded into the processor 52 enable multiple users to interact with the server 50 and play the game(s). The computer program instructions may arrive at the server 50 via an electromagnetic carrier signal 51 or be copied from a physical entity 53 such as a computer program product, a memory device or a record medium such as a CD-ROM or DVD.

The server 50, as illustrated in Fig. 2, detects an event specified by the data structure 17 in a game played using device 10A at step 30. The server 50, at step 32, determines the penalty state associated with the detected event in the data structure 17. Then, the server 50 changes the manner in which it interacts with the gaming device 10A at step 34. The penalty state in this circumstance is not a penalty state of the server 50 but it is a virtual penalty state associated with the gaming device 10A or its user. Typically, the server 50 will store a status flag against an identification of the gaming device 10A (or its user) that indicates the virtual state of the gaming device. Normally, the status flag would indicate a normal state, but at step 34 the flag is changed to indicate the determined penalty state. The server uses the value of the status flag to affect how a user of the gaming device participates in the game provided by the gaming server 50. As described above, if the gaming device 10A is in a virtual penalty state then its user's character in the game is handicapped or disadvantaged or the game play is diminished in some way or the user's participation in the game is limited in some aspect.

When the virtual state of the gaming device 10A is changed to a penalty state at step 34, a timer in the server 50 is started at step 36 and the server 50 controls the gaming device 10 to present a transaction option to the user for disabling the penalty state. In the illustrated example, the option involves the purchase of a token, however, in other implementations it may involve the completion of a specified task.

The client gaming device 10 comprises a user interface 14 for providing, in response to the server 50 changing the state of the game for the user from a first non-penalty state to a second penalty state, a user-selectable transaction option for completing a transaction with the server that changes the state of the game for the user from the second penalty state to the first non- penalty state.

The process in the server then enters the loop 39. The loop is exited if the timer exceeds a threshold. This threshold value may be dependent upon the current penalty state and may be stored as a value associated with the current penalty state in the data structure 17. The loop 39 may also be exited if a token is received by the gaming device 10A or the specified task is completed in the game at step 42. When the loop 39 is exited at the server 50, the status flag associated with the gaming device 10A is reset to indicate a normal state for the gaming device 10A.

Figure 4 illustrates a transaction, initiated by a user of the remote device by accepting the transaction option. The transaction changes the state of the game from a penalty state to a non-penalty state.

If the transaction option for disabling the penalty state is the purchase of an electronic token, then the server controls the client gaming device 10A to present a transaction option for purchasing an electronic token. If the user accepts this transaction option a transaction message 101 identifying the user is sent to a remote authorization server 50 using the radio transceiver 24. When the transaction message 101 is received at the authorization server 50, the server issues a token to the server 50 that authorizes the deactivation of the current penalty state of the user of gaming device 10A. In the example illustrated, the authorization server and the gaming server 50 are the same device. However, in other implementations they may be different devices. The authorization server also uses the identification information of the user to charge the user for issuing the token. The charge 103 made for a token may vary and may dependent upon the particular penalty state it deactivates.

If the transaction option for disabling the penalty state is the completion of an extra specified task, then a transaction message 101 is sent to a remote authorization server 50 using the radio transceiver 24. Typically, this transaction message 101 is dependant upon the current penalty state and includes an identification of the user of the gaming device 10. When the transaction message 101 is received at the authorization server 50, the server issues a specified task to the gaming device by sending to the gaming device 10 a message 102 that either specifies the task or identifies the specified task. The server may also use the identification information of the user to charge the user for issuing the specified task. The charge 103 made for a task may vary and may dependent upon the particular penalty state it deactivates. The messages 101, 102 exchanged between the gaming device 10 and the server 50 may be SMS messages. The specified task may, for example, involve a test of skill or knowledge. In one implementation, the specified task involves answering one or more questions, provided by the server, correctly. As an example, if a game character is injured the specified task may involve answering a series of medical questions. This advantageously enables the introduction of educational material into the game.

A revenue stream from a game can thus be obtained by transacting with a remote gaming device, used by a user to play a game, to change the state of the game for the user from a penalty state to a non-penalty state.

As described previously, the multi-user game may comprise one or more "user playing objects" and each user playing object may have one or more attributes. Each different event specified in the data structure 17 may have a different associated penalty state. A penalty state may disable a user playing object in the game. Another possible type of penalty state may disable all user playing objects associated with the current user in this and other games. A further possible type of penalty state affects one or more attributes of a user playing object associated with the user in the current game. A further possible type of penalty state affects one or more attributes of a user playing object associated with the user in this game and one or more corresponding attributes of the user playing object associated with the user in at least another game. Thus a penalty state may be limited to the current game or may have persistence through a number of different games. The penalty state may prevent a user playing a game or may limit the way in which a user plays a game. A penalty state may or may not have persistence between sessions and/or game instantiations. This persistence in time may be achieved by storing when a gaming session ends the timer value, a real time clock value at that time and information identifying the current penalty state. Then, when a new session is initiated, the prior penalty state is identified from the stored information and recorded real clock time value is subtracted from the current real clock time value and the difference is added to the recorded timer value to obtain a current timer value. The current timer value is then compared with the relevant threshold associated with the prior penalty state as in step 40 of figure 2. If the threshold is exceeded, the state of the gaming device is set to the normal state, but if the threshold is not exceeded, the state of the device is set to the prior penalty state.

Although embodiments of the present invention have been described in the preceding paragraphs with reference to various examples, it should be appreciated that modifications to the examples given can be made without departing from the scope of the invention as claimed.

## Claims

1. A gaming device (10) for playing a game comprising:
detection means (12) for detecting the occurrence of a specified event within a game while it is being played; and
control means (12) for changing the state of the gaming device (10) from a first non-penalty state to a second, penalty state in response to the detection means (12) detecting the occurrence of the specified event within the game and for returning the state of the gaming device (10) from the second, penalty state to the first non-penalty state, wherein the second penalty state is persistent between instantiations of the game,
wherein the control means (12) is configured to cause the gaming device to start a timer when the control means changes the state of the gaming device (10) from the first non-penalty state to the second penalty state and is configured to return the state of the gaming device (10) from the second penalty state to the first non-penalty state when the timer exceeds a predetermined period, the gaming device (10) comprising a memory (16) for recording a value of the timer when a game session ends while in the penalty state, wherein the control means (12) is configured to cause the gaming device to update the value of the timer when a game session is started,
determine whether the updated value of the timer exceeds the predetermined period and determine whether the state of the device is the first non-penalty state or the second penalty state.

2. A gaming device (10) as claimed in claim 1, wherein the specified event is one of a plurality of different specified events within a game.

3. A gaming device (10) as claimed in claim 1 or 2, wherein the second penalty state is one of a multiplicity of penalty states for the game, each of a plurality of different specified events being associated with one of the multiplicity of penalty states.

4. A gaming device (10) as claimed in claim 1, 2 or 3, wherein the likelihood of one of a plurality of specified events occurring within the game is at least partially dependent upon how a user of the gaming device (10) plays the game.

5. A gaming device (10) as claimed in any preceding claim, wherein the control means (12) is configured to return the state of the gaming device (10) from the second, penalty state to the first non-penalty state by one of a plurality of routes.

6. A gaming device (10) as claimed in claim 5, wherein at least one of the routes involves a financial transaction (103).

7. A gaming device (10) as claimed in claim 5 or 6, wherein at least one of the routes involves waiting (40) a predetermined period.

8. A gaming device (10) as claimed in claim 5, 6 or 7, wherein at least one of the routes involves performing a specified task.

9. A gaming device (10) as claimed in any preceding claim, wherein the second penalty state is a state in which the game continues but with diminished game play.

10. A gaming device (10) as claimed in claim 1, wherein the control means (12) is configured to return the state of the gaming device (10) from the second, penalty state to the first non-penalty state when the updated value of the timer exceeds the predetermined period.

11. A gaming device (10) as claimed in claim 1 or 2, further comprising means (24) for receiving an electronic token, wherein the control means (12) is configured to return the state of the gaming device (10) from the second, penalty state to the first non-penalty state in response to the receipt (42) of an electronic token

12. A gaming device (10) as claimed in claim 11, wherein the means (24) for receiving comprises a radio transceiver and the electronic token is received wirelessly via the radio transceiver, wherein the electronic token is a message received via the radio transceiver in response (102) to a request (101) message, identifying the user for billing, sent via the radio transceiver, the gaming device (10) further comprising a display which is controlled by the control means, when the state of the gaming device (10) changes from the first non-penalty state to the second penalty state, to present a user selectable option for obtaining a token immediately, wherein user selection of the option controls the gaming device (10) to send the request message via the radio transceiver.

13. A gaming device (10) as claimed in any preceding claim, wherein the control means (12) is configured to cause the gaming device to present a specified task for completion by a user of the gaming device (10) and is configured to return the state of the gaming device (10) from the second, penalty state to the first non-penalty state on the successful completion of the specified task by the user.

14. A gaming device (10) as claimed in claim 13, further comprising a radio transceiver for wirelessly sending a request message identifying the user for billing and for receiving, in response, a message including a specification of the task, the gaming device (10) further comprising a display which is controlled by the control means, when the state of the gaming device (10) changes from the first non-penalty state to the second penalty state, to present a user selectable option for obtaining a specified task immediately, wherein user selection of the option controls the gaming device (10) to send the request message via the radio transceiver.

15. A gaming device (10) as claimed in any preceding claim, wherein the second penalty state is persistent between sessions of a current instantiation of the game.

16. A gaming device (10) as claimed in any preceding claim, operable to play a plurality of games wherein the second penalty state is persistent between the plurality of games.

17. A gaming device (10) as claimed in any preceding claim wherein the game comprises a user playing object associated with the user, the gaming device being configured during the second penalty state of the gaming device (10) to disable the user playing object associated with the user of the gaming device (10).

18. A gaming device (10) as claimed in any one of claims 1 to 16, configured to play a plurality of games each of which comprises a user playing object, wherein during the second penalty state of the gaming device (10) all user playing objects associated with the user of the gaming device (10) are disabled.

19. A gaming device (10) as claimed in any one of claims 1 to 16, wherein the game comprises a user playing object that is associated with the user of the gaming device (10) and has one or more attributes, the gaming device being configured during the second penalty state of the gaming device (10) to vary at least one attribute of the user playing object associated with the user in the game.

20. A gaming device (10) as claimed in any one of claims 1 to 16, configured to play a plurality of games each of which comprises a user playing object that is associated with the user of the gaming device (10) and has one or more attributes, the gaming device being configured during the second state of the gaming device (10) to vary at least one attribute of the user playing object associated with the user in the game and to vary similarly at least one attribute of the user playing object associated with the user in another game.

21. A gaming device (10) as claimed in any preceding claim wherein the gaming device is arranged such that the occurrence of the event within the game is dependent upon how a user of the gaming device (10) is playing the game.

22. A gaming device (10) as claimed in any preceding claim wherein the gaming device is a hand-portable electronic device or a mobile cellular telephone.

23. A computer program comprising computer program instructions which when run on a computer provide a gaming device (10), for playing a game, the computer program providing:
detection means (12) for detecting the occurrence of a specified event within a game while it is being played; and
control means (12) for changing the state of the gaming device (10) from a first non-penalty state to a second, penalty state in response to the detection means (12) detecting the occurrence of the specified event within the game and for returning the state of the gaming device (10) from the second, penalty state to the first non-penalty state, wherein the second penalty state is persistent between instantiations of the game,
wherein the control means (12) is configured to cause the gaming device to start a timer when the control means changes the state of the gaming device (10) from the first non-penalty state to the second penalty state and is configured to return the state of the gaming device (10) from the second penalty state to the first non-penalty state when the timer exceeds a predetermined period, the computer program for recording a value of the timer in a memory of the gaming device when a game session ends while in the penalty state, wherein the control means (12) is configured to cause the gaming device to update the value of the timer when a game session is started, determine whether the updated value of the timer exceeds the predetermined period and determine whether the state of the device is the first non-penalty state or the second penalty state.

24. A system (100) for enabling a plurality of gaming devices (10A, 10B ...) including a first gaming device (10A) having a first user and a second gaming device (10B) having a second user, to participate in a game, the system comprising:
a game server (50) that is remotely accessed by the plurality of gaming devices (10) to play a game, the game server comprising:
detection means (52) for detecting the occurrence of a specified event within a game while it is being played by the first user; and
control means (52) for changing the state of the game for the first user from a first non-penalty state to a second penalty state in response to the detection means (12) detecting the occurrence of the specified event and for returning the state of the game for the first user from the second penalty state to the first non-penalty state, wherein the second penalty state is persistent between instantiations of the game,
wherein the control means (52) is configured to cause the game server to start a timer when the control means changes the state of the game for the first user from the first non-penalty state to the second penalty state and is configured to return the state of the game for the first user from the second penalty state to the first non-penalty state when the timer exceeds a predetermined period, the game server (50) comprising a memory for recording a value of the timer when a game session ends while in the penalty state, wherein the control means (52) is configured to cause the game server to update the value of the timer when a game session is started, determine whether the updated value of the timer exceeds the predetermined period and
determine whether the state of the game for the first user is the first non-penalty state or the second penalty state.

25. A system as claimed in claim 24, wherein the game is a multi-user game that is playable simultaneously by the first and second users, wherein the specified event within the game is a result of the action of the second user while playing the game.

26. A system as claimed in claim 24 or 25, wherein the
detection means (12) is additionally configured to detect the occurrence of a specified event, relating to the second user, within the game while it is being played by the second user; and the control means (12) is configured to change the state of the game for the second user from a first non-penalty state to a second penalty state in response to the detection means (12) detecting the occurrence of the specified event, relating to the second user, and for returning the state of the game for the second user from the second penalty state to the first non-penalty state after one of: the expiry of a predetermined period; the receipt of an electronic token at the input means during the predetermined period; completion of a specified task by the second user.

27. A game server (50) that is remotely accessible by a plurality of users playing a game, the game server comprising:
detection means (52) for detecting while the game is being played the occurrence of a specified event in the game and the user(s) associated with that event; and control means (52) for changing the state of the game for the associated user(s) only from a first non-penalty state to a second penalty state in response to the detection means (12) detecting the occurrence of the specified event and the user(s) associated with the event and for returning the state of the game for an associated user from the second penalty state to the first non-penalty state when the associated user completes a transaction wherein the second penalty state is persistent between instantiations of the game,
wherein the control means (52) is configured to cause the game server to start a timer when the control means changes the state of the game for the associated user(s) from the first non-penalty state to the second penalty state and is configured to return the state of the game for the associated user(s) from the second penalty state to the first non-penalty state when the timer exceeds a predetermined period, the game server (50) comprising a memory for recording a value of the timer when a game session ends while in the penalty state, wherein the control means (52) is configured to cause the game server to update the value of the timer when a game session is started, determine whether the updated value of the timer exceeds the predetermined period and determine whether the state of the game for the associated user(s) is the first non-penalty state or the second penalty state.

28. A game server as claimed in claim 28, wherein the control means (12) is configured to present a specified task for completion by a first one of the user(s) and is configured to return the state of the game for the first one of the user(s) from the second, penalty state to the first non-penalty state on the successful completion of the specified task by the first one of the user(s).

29. A computer program comprising computer program instructions which when run on a computer provides a game server the computer program providing:
detection means (12) for detecting, while the game is being played, an occurrence of a specified event in the game and the user(s) associated with that event; and control means (12) for changing the state of the game for only the associated user(s) from a first non-penalty state to a second penalty state in response to the detection means (12) detecting the occurrence of the specified event and the user(s) associated with the event and for returning the state of the game for an associated user from the second penalty state to the first non-penalty state when the associated user completes a transaction,
wherein the second penalty state is persistent between instantiations of the game,
wherein the control means (52) is configured to cause the game server to start a timer when the control means changes the state of the game for the associated user(s) from the first non-penalty state to the second penalty state and is configured to return the state of the game for the associated user(s) from the second penalty state to the first non-penalty state when the timer exceeds a predetermined period, the game server (50) comprising a memory for recording a value of the timer when a game session ends while in the penalty state, wherein the control means (52) is configured to cause the game server to update the value of the timer when a game session is started, determine whether the updated value of the timer exceeds the predetermined period and determine whether the state of the game for the associated user(s) is the first non-penalty state or the second penalty state.

## Patentansprüche

1. Spielvorrichtung (10) zum Spielen eines Spiels, die Folgendes umfasst:
ein Detektionsmittel (12) zum Detektieren des Auftretens eines spezifizierten Ereignisses innerhalb eines Spiels, während es gespielt wird; und
ein Steuermittel (12) zum Wechseln des Zustands der Spielvorrichtung (10) von einem ersten Nichtstraf-Zustand in einen zweiten Straf-Zustand als Reaktion darauf, dass das Detektionsmittel (12) das Auftreten des spezifizierten Ereignisses innerhalb des Spiels detektiert, und zum Zurückführen des Zustands der Spielvorrichtung (10) von dem zweiten, Straf-Zustand zu dem ersten Nichtstraf-Zustand, wobei der zweite Straf-Zustand zwischen Instantiierungen des Spiels erhalten bleibt,
wobei das Steuermittel (12) dafür ausgelegt ist, die Spielvorrichtung zu veranlassen, einen Timer zu starten, wenn das Steuermittel den Zustand der Spielvorrichtung (10) von dem ersten Nichtstraf-Zustand zu dem zweiten Straf-Zustand wechselt, und dafür ausgelegt ist, den Zustand der Spielvorrichtung (10) von dem zweiten Straf-Zustand zu dem ersten Nichtstraf-Zustand zurückzuführen, wenn der Timer eine vorbestimmte Zeitdauer überschreitet, wobei die Spielvorrichtung (10) einen Speicher (16) zum Aufzeichnen eines Wertes des Timers, wenn eine Spielsitzung während des Straf-Zustands endet, umfasst, wobei das Steuermittel (12) dafür ausgelegt ist, die Spielvorrichtung zu veranlassen, den Wert des Timers zu aktualisieren, wenn eine Spielsitzung gestartet wird, zu bestimmen, ob der aktualisierte Wert des Timers die vorbestimmte Zeitdauer überschreitet, und zu bestimmen, ob der Zustand der Vorrichtung der erste Nichtstraf-Zustand oder der zweite Straf-Zustand ist.

2. Spielvorrichtung (10) nach Anspruch 1, wobei das spezifizierte Ereignis eines einer Vielzahl von verschiedenen spezifizierten Ereignissen innerhalb eines Spiels ist.

3. Spielvorrichtung (10) nach Anspruch 1 oder 2, wobei der zweite Straf-Zustand einer von einer Mehrzahl von Straf-Zuständen für das Spiel ist, wobei jedes aus einer Vielzahl von verschiedenen spezifizierten Ereignissen mit einem aus der Mehrzahl von Straf-Zuständen assoziiert ist.

4. Spielvorrichtung (10) nach Anspruch 1, 2 oder 3, wobei die Wahrscheinlichkeit, dass eines aus einer Vielzahl von spezifizierten Ereignissen, das innerhalb des Spiels auftritt, mindestens teilweise davon abhängt, wie ein Benutzer der Spielvorrichtung (10) das Spiel spielt.

5. Spielvorrichtung (10) nach einem der vorhergehenden Ansprüche, wobei das Steuermittel (12) dafür ausgelegt ist, den Zustand der Spielvorrichtung (10) über einen aus einer Vielzahl von Wegen von dem zweiten Straf-Zustand in den ersten Nichtstraf-Zustand zurückzuführen.

6. Spielvorrichtung (10) nach Anspruch 5, wobei mindestens einer der Wege eine finanzielle Transaktion (103) involviert.

7. Spielvorrichtung (10) nach Anspruch 5 oder 6, wobei mindestens einer der Wege das Warten (40) für eine vorbestimmte Zeitdauer involviert.

8. Spielvorrichtung (10) nach Anspruch 5, 6 oder 7, wobei mindestens einer der Wege das Durchführen einer spezifizierten Aufgabe involviert.

9. Spielvorrichtung (10) nach einem der vorhergehenden Ansprüche, wobei der zweite Straf-Zustand ein Zustand ist, in dem das Spiel weiterläuft, allerdings mit vermindertem Gameplay.

10. Spielvorrichtung (10) nach Anspruch 1, wobei das Steuermittel (12) dafür ausgelegt ist, den Zustand der Spielvorrichtung (10) von dem zweiten Straf-Zustand zu dem ersten Nichtstraf-Zustand zurückzuführen, wenn der aktualisierte Wert des Timers die vorbestimmte Zeitdauer überschreitet.

11. Spielvorrichtung (10) nach Anspruch 1 oder 2, die ferner ein Mittel (24) zum Empfangen eines elektronischen Tokens umfasst, wobei das Steuermittel (12) dafür ausgelegt ist, den Zustand der Spielvorrichtung (10) von dem zweiten Straf-Zustand zu dem ersten Nichtstraf-Zustand zurückzuführen, als Reaktion auf den Empfang (42) eines elektronischen Tokens.

12. Spielvorrichtung (10) nach Anspruch 11, wobei das Mittel (24) zum Empfangen einen Funktransceiver umfasst und das elektronische Token drahtlos über den Funktransceiver empfangen wird, wobei das elektronische Token eine Nachricht ist, die über den Funktransceiver als Reaktion (102) auf eine über den Funktransceiver gesendete Anforderungs(101)-Nachricht empfangen wird, die den Benutzer zwecks Rechnungsstellung identifiziert, wobei die Spielvorrichtung (10) ferner eine Anzeige umfasst, die von dem Steuermittel gesteuert wird, wenn der Zustand der Spielvorrichtung (10) von dem ersten Nichtstraf-Zustand zu dem zweiten Straf-Zustand wechselt, sofort eine benutzerauswählbare Option zum Erhalten eines Tokens zu präsentieren, wobei Benutzerauswahl der Option die Spielvorrichtung (10) steuert, die Anforderungsnachricht über den Funktransceiver zu senden.

13. Spielvorrichtung (10) nach einem der vorhergehenden Ansprüche, wobei das Steuermittel (12) dafür ausgelegt ist, die Spielvorrichtung zu veranlassen, eine spezifizierte Aufgabe zur Erfüllung durch einen Benutzer der Spielvorrichtung (10) zu präsentieren, und dafür ausgelegt ist, bei erfolgreicher Erfüllung der spezifizierten Aufgabe durch den Benutzer den Zustand der Spielvorrichtung (10) von dem zweiten Straf-Zustand zu dem ersten Nichtstraf-Zustand zurückzuführen.

14. Spielvorrichtung (10) nach Anspruch 13, die ferner einen Funktransceiver zum drahtlosen Senden einer Anforderungsnachricht zum Identifizieren des Benutzers zwecks Rechnungsstellung und, als Reaktion, zum Empfangen einer Nachricht, die eine Spezifikation der Aufgabe enthält, umfasst, wobei die Spielvorrichtung (10) ferner eine Anzeige umfasst, die von dem Steuermittel gesteuert wird, wenn der Zustand der Spielvorrichtung (10) von dem ersten Nichtstraf-Zustand zu dem zweiten Straf-Zustand wechselt, sofort eine benutzerauswählbare Option zum Erhalten einer spezifizierten Aufgabe zu präsentieren, wobei Benutzerauswahl der Option die Spielvorrichtung (10) steuert, die Anforderungsnachricht über den Funktransceiver zu senden.

15. Spielvorrichtung (10) nach einem der vorhergehenden Ansprüche, wobei der zweite Straf-Zustand zwischen Sitzungen einer aktuellen Instantiierung des Spiels erhalten bleibt.

16. Spielvorrichtung (10) nach einem der vorhergehenden Ansprüche, die betreibbar ist, eine Vielzahl von Spielen zu spielen, wobei der zweite Straf-Zustand zwischen der Vielzahl von Spielen erhalten bleibt.

17. Spielvorrichtung (10) nach einem der vorhergehenden Ansprüche, wobei das Spiel ein mit dem Benutzer assoziiertes Benutzerspielobjekt umfasst, wobei die Spielvorrichtung dafür ausgelegt ist, während des zweiten Straf-Zustands der Spielvorrichtung (10), das mit dem Benutzer der Spielvorrichtung (10) assoziierte Benutzerspielobjekt zu blockieren.

18. Spielvorrichtung (10) nach einem der Ansprüche 1 bis 16, die dafür ausgelegt ist, eine Vielzahl von Spielen zu spielen, die jeweils ein Benutzerspielobjekt umfassen, wobei, während des zweiten Straf-Zustands der Spielvorrichtung (10), alle mit dem Benutzer der Spielvorrichtung (10) assoziierten Benutzerspielobjekte blockiert sind.

19. Spielvorrichtung (10) nach einem der Ansprüche 1 bis 16, wobei das Spiel ein Benutzerspielobjekt umfasst, das mit dem Benutzer der Spielvorrichtung (10) assoziiert ist und eines oder mehr Attribute aufweist, wobei die Spielvorrichtung dafür ausgelegt ist, während des zweiten Straf-Zustands der Spielvorrichtung (10), mindestens ein Attribut des mit dem Benutzer assoziierten Benutzerspielobjekts in dem Spiel zu variieren.

20. Spielvorrichtung (10) nach einem der Ansprüche 1 bis 16, die dafür ausgelegt ist, eine Vielzahl von Spielen zu spielen, die jeweils ein Benutzerspielobjekt umfassen, das mit dem Benutzer der Spielvorrichtung (10) assoziiert ist und eines oder mehr Attribute aufweist, wobei die Spielvorrichtung dafür ausgelegt ist, während des zweiten Zustands der Spielvorrichtung (10), mindestens ein Attribut des mit dem Benutzer assoziierten Benutzerspielobjekts in dem Spiel zu variieren und gleichermaßen mindestens ein Attribut des mit dem Benutzer assoziierten Benutzerspielobjekts in einem weiteren Spiel zu variieren.

21. Spielvorrichtung (10) nach einem der vorhergehenden Ansprüche, wobei die Spielvorrichtung derart angeordnet ist, dass das Auftreten des Ereignisses innerhalb des Spiels davon abhängt, wie ein Benutzer der Spielvorrichtung (10) das Spiel spielt.

22. Spielvorrichtung (10) nach einem der vorhergehenden Ansprüche, wobei die Spielvorrichtung eine handtragbare elektronische Vorrichtung oder ein Mobilfunktelefon ist.

23. Computerprogramm, das Computerprogrammanweisungen umfasst, die, wenn sie auf einem Computer laufen gelassen werden, eine Spielvorrichtung (10) zum Spielen eines Spiels bereitstellen, wobei das Computerprogramm Folgendes bereitstellt:
ein Detektionsmittel (12) zum Detektieren des Auftretens eines spezifizierten Ereignisses innerhalb eines Spiels, während es gespielt wird; und
ein Steuermittel (12) zum Wechseln des Zustands der Spielvorrichtung (10) von einem ersten Nichtstraf-Zustand in einen zweiten Straf-Zustand als Reaktion darauf, dass das Detektionsmittel (12) das Auftreten des spezifizierten Ereignisses innerhalb des Spiels detektiert, und zum Zurückführen des Zustands der Spielvorrichtung (10) von dem zweiten Straf-Zustand zu dem ersten Nichtstraf-Zustand, wobei der zweite Straf-Zustand zwischen Instantiierungen des Spiels erhalten bleibt,
wobei das Steuermittel (12) dafür ausgelegt ist, die Spielvorrichtung zu veranlassen, einen Timer zu starten, wenn das Steuermittel den Zustand der Spielvorrichtung (10) von dem ersten Nichtstraf-Zustand zu dem zweiten Straf-Zustand wechselt, und dafür ausgelegt ist, den Zustand der Spielvorrichtung (10) von dem zweiten Straf-Zustand zu dem ersten Nichtstraf-Zustand zurückzuführen, wenn der Timer eine vorbestimmte Zeitdauer überschreitet, das Computerprogramm ausgelegt ist zum Aufzeichnen eines Wertes des Timers in einem Speicher der Spielvorrichtung, wenn eine Spielsitzung während des Straf-Zustands endet, wobei das Steuermittel (12) dafür ausgelegt ist, die Spielvorrichtung zu veranlassen, den Wert des Timers zu aktualisieren, wenn eine Spielsitzung gestartet wird, zu bestimmen, ob der aktualisierte Wert des Timers die vorbestimmte Zeitdauer überschreitet, und zu bestimmen, ob der Zustand der Vorrichtung der erste Nichtstraf-Zustand oder der zweite Straf-Zustand ist.

24. System (100) zum Befähigen einer Vielzahl von Spielvorrichtungen (10A, 10B...), das eine erste Spielvorrichtung (10A) mit einem ersten Benutzer und eine zweite Spielvorrichtung (10B) mit einem zweiten Benutzer, um an einem Spiel teilzunehmen, beinhaltet, wobei das System Folgendes umfasst:
einen Spielserver (50), auf den von der Vielzahl von Spielvorrichtungen (10) fernzugegriffen wird, um ein Spiel zu spielen, wobei der Spielserver Folgendes umfasst:
ein Detektionsmittel (52) zum Detektieren des Auftretens eines spezifizierten Ereignisses innerhalb eines Spiels, während es von dem ersten Benutzer gespielt wird; und
ein Steuermittel (52) zum Wechseln des Zustands des Spiels für den ersten Benutzer von einem ersten Nichtstraf-Zustand in einen zweiten Straf-Zustand als Reaktion darauf, dass das Detektionsmittel (12) das Auftreten des spezifizierten Ereignisses detektiert, und zum Zurückführen des Zustands des Spiels für den ersten Benutzer von dem zweiten Straf-Zustand zu dem ersten Nichtstraf-Zustand, wobei der zweite Straf-Zustand zwischen Instantiierungen des Spiels erhalten bleibt,
wobei das Steuermittel (52) dafür ausgelegt ist, den Spielserver zu veranlassen, einen Timer zu starten, wenn das Steuermittel den Zustand des Spiels für den ersten Benutzer von dem ersten Nichtstraf-Zustand zu dem zweiten Straf-Zustand wechselt, und dafür ausgelegt ist, den Zustand des Spiels für den ersten Benutzer von dem zweiten Straf-Zustand zu dem ersten Nichtstraf-Zustand zurückzuführen, wenn der Timer eine vorbestimmte Zeitdauer überschreitet, wobei der Spielserver (50) einen Speicher zum Aufzeichnen eines Wertes des Timers, wenn eine Spielsitzung während des Straf-Zustands endet, umfasst, wobei das Steuermittel (52) dafür ausgelegt ist, den Spielserver zu veranlassen, den Wert des Timers zu aktualisieren, wenn eine Spielsitzung gestartet wird, zu bestimmen, ob der aktualisierte Wert des Timers die vorbestimmte Zeitdauer überschreitet, und zu bestimmen, ob der Zustand des Spiels für den ersten Benutzer der erste Nichtstraf-Zustand oder der zweite Straf-Zustand ist.

25. System nach Anspruch 24, wobei das Spiel ein Mehrbenutzerspiel ist, das gleichzeitig von dem ersten und dem zweiten Benutzer spielbar ist, wobei das spezifizierte Ereignis innerhalb des Spiels ein Ergebnis der Aktion des zweiten Benutzers während des Spielens des Spiels ist.

26. System nach Anspruch 24 oder 25, wobei das Detektionsmittel (12) zusätzlich dafür ausgelegt ist, das Auftreten eines spezifizierten Ereignisses, das in Beziehung zum zweiten Benutzer steht, innerhalb des Spiels zu detektieren, während es von dem zweiten Benutzer gespielt wird; und das Steuermittel (12) dafür ausgelegt ist, den Zustand des Spiels für den zweiten Benutzer von einem ersten Nichtstraf-Zustand in einen zweiten Straf-Zustand zu wechseln, als Reaktion darauf, dass das Detektionsmittel (12) das Auftreten des spezifizierten Ereignisses detektiert, das in Beziehung zum zweiten Benutzer steht, und den Zustand des Spiels für den zweiten Benutzer von dem zweiten Straf-Zustand zu dem ersten Nichtstraf-Zustand zurückzuführen, nach einem des Folgenden: das Ablaufen einer vorbestimmten Zeitdauer; das Empfangen eines elektronischen Tokens an dem Eingabemittel, während der vorbestimmten Zeitdauer; Erfüllen einer spezifizierten Aufgabe durch den zweiten Benutzer.

27. Spielserver (50), der von einer Vielzahl von Benutzern, die ein Spiel spielen, fernzugreifbar ist, wobei der Spielserver Folgendes umfasst:
ein Detektionsmittel (52) zum Detektieren des Auftretens eines spezifizierten Ereignisses in dem Spiel, während es gespielt wird, und der(des) mit dem Ereignis assoziierten Benutzer(s); und ein Steuermittel (52) zum Wechseln des Zustands des Spiels für nur den(die) assoziierten Benutzer von einem ersten Nichtstraf-Zustand in einen zweiten Straf-Zustand als Reaktion darauf, dass das Detektionsmittel (12) das Auftreten des spezifizierten Ereignisses und der(des) mit dem Ereignis assoziierten Benutzer(s) detektiert, und zum Zurückführen des Zustands des Spiels für einen assoziierten Benutzer von dem zweiten Straf-Zustand zu dem ersten Nichtstraf-Zustand, wenn der assoziierte Benutzer eine Transaktion abschließt, wobei der zweite Straf-Zustand zwischen Instantiierungen des Spiels erhalten bleibt,
wobei das Steuermittel (52) dafür ausgelegt ist, den Spielserver zu veranlassen, einen Timer zu starten, wenn das Steuermittel den Zustand des Spiels für den(die) assoziierten Benutzer von dem ersten Nichtstraf-Zustand zu dem zweiten Straf-Zustand wechselt, und dafür ausgelegt ist, den Zustand des Spiels für den(die) assoziierten Benutzer von dem zweiten Straf-Zustand zu dem ersten Nichtstraf-Zustand zurückzuführen, wenn der Timer eine vorbestimmte Zeitdauer überschreitet, wobei der Spielserver (50) einen Speicher zum Aufzeichnen eines Wertes des Timers, wenn eine Spielsitzung während des Straf-Zustands endet, umfasst, wobei das Steuermittel (52) dafür ausgelegt ist, den Spielserver zu veranlassen, den Wert des Timers zu aktualisieren, wenn eine Spielsitzung gestartet wird, zu bestimmen, ob der aktualisierte Wert des Timers die vorbestimmte Zeitdauer überschreitet, und zu bestimmen, ob der Zustand des Spiels für den(die) assoziierten Benutzer der erste Nichtstraf-Zustand oder der zweite Straf-Zustand ist.

28. Spielserver nach Anspruch 28, wobei das Steuermittel (12) dafür ausgelegt ist, eine spezifizierte Aufgabe zur Erfüllung durch einen ersten der(des) Benutzers zu präsentieren und dafür ausgelegt ist, bei erfolgreicher Erfüllung der spezifizierten Aufgabe durch den ersten der(des) Benutzer(s), den Zustand des Spiels für den ersten der(des) Benutzer(s) von dem zweiten Straf-Zustand zu dem ersten Nichtstraf-Zustand zurückzuführen.

29. Computerprogramm, das Computerprogrammanweisungen umfasst, die, wenn sie auf einem Computer laufen gelassen werden, einen Spielserver bereitstellen, wobei das Computerprogramm Folgendes bereitstellt:
ein Detektionsmittel (12) zum Detektieren eines Auftretens eines spezifizierten Ereignisses in dem Spiel, während es gespielt wird, und der(des) mit dem Ereignis assoziierten Benutzer(s); und ein Steuermittel (12) zum Wechseln des Zustands des Spiels für nur den(die) assoziierten Benutzer von einem ersten Nichtstraf-Zustand in einen zweiten Straf-Zustand als Reaktion darauf, dass das Detektionsmittel (12) das Auftreten des spezifizierten Ereignisses und der(des) mit dem Ereignis assoziierten Benutzer(s) detektiert, und zum Zurückführen des Zustands des Spiels für einen assoziierten Benutzer von dem zweiten Straf-Zustand zu dem ersten Nichtstraf-Zustand, wenn der assoziierte Benutzer eine Transaktion abschließt, wobei der zweite Straf-Zustand zwischen Instantiierungen des Spiels erhalten bleibt,
wobei das Steuermittel (52) dafür ausgelegt ist, den Spielserver zu veranlassen, einen Timer zu starten, wenn das Steuermittel den Zustand des Spiels für den(die) assoziierten Benutzer von dem ersten Nichtstraf-Zustand zu dem zweiten Straf-Zustand wechselt, und dafür ausgelegt ist, den Zustand des Spiels für den(die) assoziierten Benutzer von dem zweiten Straf-Zustand zu dem ersten Nichtstraf-Zustand zurückzuführen, wenn der Timer eine vorbestimmte Zeitdauer überschreitet, wobei der Spielserver (50) einen Speicher zum Aufzeichnen eines Wertes des Timers, wenn eine Spielsitzung während des Straf-Zustands endet, umfasst, wobei das Steuermittel (52) dafür ausgelegt ist, den Spielserver zu veranlassen, den Wert des Timers zu aktualisieren, wenn eine Spielsitzung gestartet wird, zu bestimmen, ob der aktualisierte Wert des Timers die vorbestimmte Zeitdauer überschreitet, und zu bestimmen, ob der Zustand des Spiels für den(die) assoziierten Benutzer der erste Nichtstraf-Zustand oder der zweite Straf-Zustand ist.

## Revendications

1. Dispositif de jeu (10) pour jouer un jeu, comprenant :
un moyen de détection (12) pour détecter l'occurrence d'un événement spécifié au sein d'un jeu pendant qu'il est joué ; et
un moyen de contrôle (12) pour changer l'état du dispositif de jeu (10) depuis un premier état de non-pénalité à un deuxième état avec pénalité en réaction au fait que le moyen de détection (12) détecte l'occurrence de l'événement spécifié au sein du jeu, et pour faire revenir l'état du dispositif de jeu (10) depuis le deuxième état avec pénalité vers le premier état de non pénalité, cas dans lequel le deuxième état avec pénalité persiste entre les instanciations du jeu,
cas dans lequel le moyen de contrôle (12) est configuré de façon à obliger le dispositif de jeu à démarrer une minuterie quand le moyen de contrôle change l'état du dispositif de jeu (10) depuis le premier état de non-pénalité au deuxième état avec pénalité, et est configuré de façon à faire revenir l'état du dispositif de jeu (10) depuis le deuxième état avec pénalité vers le premier état de non pénalité lorsque la minuterie dépasse une durée prédéterminée, le dispositif de jeu (10) comprenant une mémoire (16) pour enregistrer une valeur de la minuterie lorsqu'une session de jeu se termine au cours de l'état avec pénalité, cas dans lequel le moyen de contrôle (12) est configuré de façon à obliger le dispositif de jeu à mettre à jour la valeur de la minuterie quand une session de jeu est démarrée, à déterminer si la valeur mise à jour de la minuterie dépasse, ou non, la durée prédéterminée et à déterminer si l'état du dispositif est le premier état de non pénalité ou le deuxième état avec pénalité.

2. Dispositif de jeu (10) selon la revendication 1, l'événement spécifié étant un événement parmi une pluralité de différents événements spécifiés au sein d' un j jeu.

3. Dispositif de jeu (10) selon la revendication 1 ou 2, le deuxième état avec pénalité étant un état parmi une multiplicité d'états avec pénalité pour le jeu, chaque événement parmi une pluralité de différents événements spécifiés étant associé à un état parmi la multiplicité d'états de pénalité.

4. Dispositif de jeu (10) selon la revendication 1, 2 ou 3, la probabilité qu'un événement parmi une pluralité d'événements spécifiés se produise au sein du jeu étant au moins partiellement subordonnée à la manière dont un utilisateur du dispositif de jeu (10) joue le jeu.

5. Dispositif de jeu (10) selon l'une quelconque des revendications précédentes, le moyen de contrôle (12) étant configuré de façon à faire revenir l'état du dispositif de jeu (10) depuis le deuxième état avec pénalité vers le premier état de non pénalité suivant un chemin parmi une pluralité de chemins.

6. Dispositif de jeu (10) selon la revendication 5, au moins l'un des chemins faisant intervenir une transaction financière (103).

7. Dispositif de jeu (10) selon la revendication 5 ou 6, au moins l'un des chemins faisant intervenir l'attente (40) pendant une durée prédéterminée.

8. Dispositif de jeu (10) selon la revendication 5, 6 ou 7, au moins l'un des chemins faisant intervenir la réalisation d'une tâche spécifiée.

9. Dispositif de jeu (10) selon l'une quelconque des revendications précédentes, le deuxième état avec pénalité étant un état dans lequel le jeu continue mais avec une capacité à jouer restreinte.

10. Dispositif de jeu (10) selon la revendication 1, le moyen de contrôle (12) étant configuré de façon à faire revenir l'état du dispositif de jeu (10) depuis le deuxième état avec pénalité vers le premier état de non pénalité, lorsque la valeur mise à jour de la minuterie dépasse la durée prédéterminée.

11. Dispositif de jeu (10) selon la revendication 1 ou 2, comprenant en outre des moyens (24) pour recevoir un jeton électronique, cas dans lequel le moyen de contrôle (12) est configuré de façon à faire revenir l'état du dispositif de jeu (10) depuis le deuxième état avec pénalité vers le premier état de non pénalité, en réaction à la réception (42) d'un jeton électronique.

12. Dispositif de jeu (10) selon la revendication 11, les moyens (24) de réception comprenant un émetteur-récepteur radio, et le jeton électronique étant reçu en mode sans fil par l'intermédiaire de l'émetteur-récepteur radio, cas dans lequel le jeton électronique est un message reçu par l'intermédiaire de l'émetteur-récepteur radio, en réaction (102) à un message de demande (101), identifiant l'utilisateur à des fins de facturation, envoyé par l'intermédiaire de l'émetteur-récepteur radio, le dispositif de jeu (10) comprenant en outre un afficheur qui est piloté par le moyen de contrôle, lorsque l'état du dispositif de jeu (10) change depuis le premier état de non-pénalité au deuxième état avec pénalité, afin de présenter une option sélectionnable par l'utilisateur pour obtenir un jeton immédiatement, cas dans lequel la sélection de l'option par l'utilisateur pilote le dispositif de jeu (10) afin d'envoyer le message de demande par l'intermédiaire de l'émetteur-récepteur radio.

13. Dispositif de jeu (10) selon l'une quelconque des revendications précédentes, le moyen de contrôle (12) étant configuré de façon à obliger le dispositif de jeu à présenter une tâche spécifiée en vue de son accomplissement par un utilisateur du dispositif de jeu (10), et étant configuré de façon à faire revenir l'état du dispositif de jeu (10) depuis le deuxième état avec pénalité vers le premier état de non pénalité lors de l'accomplissement réussi de la tâche spécifiée par l'utilisateur.

14. Dispositif de jeu (10) selon la revendication 13, comprenant en outre un émetteur-récepteur radio pour envoyer en mode sans fil un message de demande qui identifie l'utilisateur à des fins de facturation, et pour recevoir, en réponse, un message lequel inclut une spécification de la tâche, le dispositif de jeu (10) comprenant en outre un afficheur qui est piloté par le moyen de contrôle, lorsque l'état du dispositif de jeu (10) change depuis le premier état de non-pénalité au deuxième état avec pénalité, afin de présenter une option sélectionnable par l'utilisateur pour obtenir immédiatement une tâche spécifiée, cas dans lequel la sélection de l'option par l'utilisateur pilote le dispositif de jeu (10) afin d'envoyer le message de demande par l'intermédiaire de l'émetteur-récepteur radio.

15. Dispositif de jeu (10) selon l'une quelconque des revendications précédentes, le deuxième état avec pénalité persistant entre des sessions d'une instanciation actuelle du jeu.

16. Dispositif de jeu (10) selon l'une quelconque des revendications précédentes, exploitable de façon à permettre le jeu d'une pluralité de jeux, cas dans lequel le deuxième état avec pénalité persiste entre la pluralité de jeux.

17. Dispositif de jeu (10) selon l'une quelconque des revendications précédentes, le jeu comprenant un objet de jeu d'utilisateur, associé à l'utilisateur, le dispositif de jeu étant configuré, au cours du deuxième état avec pénalité du dispositif de jeu (10), de façon à désactiver l'objet de jeu d'utilisateur associé à l'utilisateur du dispositif de jeu (10).

18. Dispositif de jeu (10) selon l'une quelconque des revendications 1 à 16, configuré de façon à permettre le jeu d'une pluralité de jeux dont chacun comprend un objet de jeu d'utilisateur, cas dans lequel au cours du deuxième état avec pénalité du dispositif de jeu (10), tous les objets de jeu d'utilisateur associés à l'utilisateur du dispositif de jeu (10) sont désactivés.

19. Dispositif de jeu (10) selon l'une quelconque des revendications 1 à 16, le jeu comprenant un objet de jeu d'utilisateur qui est associé à l'utilisateur du dispositif de jeu (10) et possédant un ou plusieurs attributs, le dispositif de jeu étant configuré, au cours du deuxième état avec pénalité du dispositif de jeu (10), de façon à varier au moins un attribut de l'objet de jeu d'utilisateur associé à l'utilisateur dans le jeu.

20. Dispositif de jeu (10) selon l'une quelconque des revendications 1 à 16, configuré de façon à permettre le jeu d'une pluralité de jeux dont chacun comprend un objet de jeu d'utilisateur qui est associé à l'utilisateur du dispositif de jeu (10) et possède un ou plusieurs attributs, le dispositif de jeu étant configuré, au cours du deuxième état du dispositif de jeu (10), de façon à varier au moins un attribut de l'objet de jeu d'utilisateur associé à l'utilisateur dans le jeu, et à varier de manière semblable au moins un attribut de l'objet de jeu d'utilisateur associé à l'utilisateur dans un autre jeu.

21. Dispositif de jeu (10) selon l'une quelconque des revendications précédentes, le dispositif de jeu étant agencé de sorte que l'occurrence de l'événement au sein du jeu soit subordonnée à la manière dont un utilisateur du dispositif de jeu (10) est en train de jouer le jeu.

22. Dispositif de jeu (10) selon l'une quelconque des revendications précédentes, le dispositif de jeu étant un dispositif électronique portable à la main ou un téléphone cellulaire mobile.

23. Programme informatique comprenant des instructions de programme informatique qui, lorsqu'elles sont exécutées sur un ordinateur, procurent un dispositif de jeu (10) pour jouer un jeu, le programme informatique fournissant :
un moyen de détection (12) pour détecter l'occurrence d'un événement spécifié au sein d'un jeu pendant qu'il est joué ; et
un moyen de contrôle (12) pour changer l'état du dispositif de jeu (10) depuis un premier état de non-pénalité à un deuxième état avec pénalité en réaction au fait que le moyen de détection (12) détecte l'occurrence de l'événement spécifié au sein du jeu, et pour faire revenir l'état du dispositif de jeu (10) depuis le deuxième état avec pénalité vers le premier état de non pénalité, cas dans lequel le deuxième état avec pénalité persiste entre les instanciations du jeu,
cas dans lequel le moyen de contrôle (12) est configuré de façon à obliger le dispositif de jeu à démarrer une minuterie quand le moyen de contrôle change l'état du dispositif de jeu (10) depuis le premier état de non-pénalité au deuxième état avec pénalité, et est configuré de façon à faire revenir l'état du dispositif de jeu (10) depuis le deuxième état avec pénalité vers le premier état de non pénalité lorsque la minuterie dépasse une durée prédéterminée, le programme informatique étant destiné à enregistrer une valeur de la minuterie dans une mémoire du dispositif de jeu lorsqu'une session de jeu se termine au cours de l'état avec pénalité, cas dans lequel le moyen de contrôle (12) est configuré de façon à obliger le dispositif de jeu à mettre à jour la valeur de la minuterie quand une session de jeu est démarrée, à déterminer si la valeur mise à jour de la minuterie dépasse, ou non, la durée prédéterminée et à déterminer si l'état du dispositif est le premier état de non pénalité ou le deuxième état avec pénalité.

24. Système (100) pour offrir une pluralité de dispositifs de jeu (10A, 10B, ...) incluant un premier dispositif de jeu (10A) avec un premier utilisateur et un deuxième dispositif de jeu (10B) avec un deuxième utilisateur, pour participer à un jeu, le système comprenant :
un serveur de jeu (50) auquel la pluralité de dispositifs de jeu (10) accède à distance pour jouer un jeu, le serveur de jeu comprenant :
un moyen de détection (52) pour détecter l'occurrence d'un événement spécifié au sein d'un jeu pendant qu'il est joué par le premier utilisateur ; et
un moyen de contrôle (52) pour changer l'état du jeu pour le premier utilisateur depuis un premier état de non-pénalité à un deuxième état avec pénalité en réaction au fait que le moyen de détection (12) détecte l'occurrence de l'événement spécifié, et pour faire revenir l'état du jeu pour le premier utilisateur depuis le deuxième état avec pénalité vers le premier état de non pénalité, cas dans lequel le deuxième état avec pénalité persiste entre les instanciations du jeu,
cas dans lequel le moyen de contrôle (52) est configuré de façon à obliger le serveur de jeu à démarrer une minuterie quand le moyen de contrôle change l'état du jeu pour le premier utilisateur depuis le premier état de non-pénalité au deuxième état avec pénalité, et est configuré de façon à faire revenir l'état du jeu pour le premier utilisateur depuis le deuxième état avec pénalité vers le premier état de non pénalité lorsque la minuterie dépasse une durée prédéterminée, le serveur de jeu (50) comprenant une mémoire pour enregistrer une valeur de la minuterie lorsqu'une session de jeu se termine au cours de l'état avec pénalité, cas dans lequel le moyen de contrôle (52) est configuré de façon à obliger le serveur de jeu à mettre à jour la valeur de la minuterie quand une session de jeu est démarrée, à déterminer si la valeur mise à jour de la minuterie dépasse, ou non, la durée prédéterminée et à déterminer si l'état du jeu pour le premier utilisateur est le premier état de non pénalité ou le deuxième état avec pénalité.

25. Système selon la revendication 24, le jeu étant un jeu à utilisateurs multiples qui est apte à être joué simultanément par les premier et deuxième utilisateurs, cas dans lequel l'événement spécifié au sein du jeu est un résultat de l'action du deuxième utilisateur pendant qu'il joue le jeu.

26. Système selon la revendication 24 ou 25, le moyen de détection (12) étant configuré additionnellement de façon à détecter l'occurrence d'un événement spécifié, relatif au deuxième utilisateur, au sein du jeu pendant qu'il est joué par le deuxième utilisateur ; et le moyen de contrôle (12) étant configuré de façon à changer l'état du jeu pour le deuxième utilisateur depuis un premier état de non-pénalité à un deuxième état avec pénalité en réaction au fait que le moyen de détection (12) détecte l'occurrence de l'événement spécifié, relatif au deuxième utilisateur, et à faire revenir l'état du jeu pour le deuxième utilisateur depuis le deuxième état avec pénalité vers le premier état de non pénalité, après l'une des situations suivantes : l'expiration d'une durée prédéterminée ; la réception d'un jeton électronique au niveau du moyen de saisie pendant la durée prédéterminée ; l'accomplissement d'une tâche spécifiée par le deuxième utilisateur.

27. Serveur de jeu (50) qui est accessible à distance par une pluralité d'utilisateurs jouant un jeu, le serveur de jeu comprenant :
un moyen de détection (52) pour détecter, pendant que le jeu est en train d'être joué, l'occurrence d'un événement spécifié dans le jeu et l'utilisateur / les utilisateurs associé(s) à cet événement ; et un moyen de contrôle (52) pour changer l'état du jeu pour l'utilisateur / les utilisateurs associé(s) uniquement depuis un premier état de non-pénalité à un deuxième état avec pénalité en réaction au fait que le moyen de détection (12) détecte l'occurrence de l'événement spécifié, et l'utilisateur / les utilisateurs associé(s) à l'événement, et pour faire revenir l'état du jeu pour un utilisateur associé depuis le deuxième état avec pénalité vers le premier état de non pénalité lorsque l'utilisateur associé achève une transaction, cas dans lequel le deuxième état avec pénalité persiste entre les instanciations du jeu,
cas dans lequel le moyen de contrôle (52) est configuré de façon à obliger le serveur de jeu à démarrer une minuterie quand le moyen de contrôle change l'état du jeu pour l'utilisateur / les utilisateurs associé(s) depuis le premier état de non-pénalité au deuxième état avec pénalité, et est configuré de façon à faire revenir l'état du jeu pour l'utilisateur / les utilisateurs associé(s) depuis le deuxième état avec pénalité vers le premier état de non pénalité lorsque la minuterie dépasse une durée prédéterminée, le serveur de jeu (50) comprenant une mémoire pour enregistrer une valeur de la minuterie lorsqu'une session de jeu se termine au cours de l'état avec pénalité, cas dans lequel le moyen de contrôle (52) est configuré de façon à obliger le serveur de jeu à mettre à jour la valeur de la minuterie quand une session de jeu est démarrée, à déterminer si la valeur mise à jour de la minuterie dépasse, ou non, la durée prédéterminée et à déterminer si l'état du jeu pour l'utilisateur / les utilisateurs associé(s) est le premier état de non pénalité ou le deuxième état avec pénalité.

28. Serveur de jeu selon la revendication 28, le moyen de contrôle (12) étant configuré de façon à présenter une tâche spécifiée devant être accomplie par un premier utilisateur parmi l'utilisateur / les utilisateurs, et étant configuré de façon à faire revenir l'état du jeu pour le premier utilisateur parmi l'utilisateur / les utilisateurs depuis le deuxième état avec pénalité vers le premier état de non pénalité lors de l'accomplissement réussi de la tâche spécifiée par le premier utilisateur parmi l'utilisateur / les utilisateurs.

29. Programme informatique comprenant des instructions de programme informatique qui, lorsqu'elles sont exécutées sur un ordinateur, procurent un serveur de jeu, le programme informatique fournissant :
un moyen de détection (12) pour détecter, pendant que le jeu est en train d'être joué, une occurrence d'un événement spécifié dans le jeu et l'utilisateur / les utilisateurs associé(s) à cet événement ; et un moyen de contrôle (12) pour changer l'état du jeu pour uniquement l'utilisateur / les utilisateurs associé(s) depuis un premier état de non-pénalité à un deuxième état avec pénalité en réaction au fait que le moyen de détection (12) détecte l'occurrence de l'événement spécifié, et l'utilisateur / les utilisateurs associé(s) à l'événement, et pour faire revenir l'état du jeu pour un utilisateur associé depuis le deuxième état avec pénalité vers le premier état de non pénalité lorsque l'utilisateur associé achève une transaction, cas dans lequel le deuxième état avec pénalité persiste entre les instanciations du jeu,
cas dans lequel le moyen de contrôle (52) est configuré de façon à obliger le serveur de jeu à démarrer une minuterie quand le moyen de contrôle change l'état du jeu pour l'utilisateur / les utilisateurs associé(s) depuis le premier état de non-pénalité au deuxième état avec pénalité, et est configuré de façon à faire revenir l'état du jeu pour l'utilisateur / les utilisateurs associé(s) depuis le deuxième état avec pénalité vers le premier état de non pénalité lorsque la minuterie dépasse une durée prédéterminée, le serveur de jeu (50) comprenant une mémoire pour enregistrer une valeur de la minuterie lorsqu'une session de jeu se termine au cours de l'état avec pénalité, cas dans lequel le moyen de contrôle (52) est configuré de façon à obliger le serveur de jeu à mettre à jour la valeur de la minuterie quand une session de jeu est démarrée, à déterminer si la valeur mise à jour de la minuterie dépasse, ou non, la durée prédéterminée et à déterminer si l'état du jeu pour l'utilisateur / les utilisateurs associé(s) est le premier état de non pénalité ou le deuxième état avec pénalité.
